# EUROPEAN PATENT APPLICATION

(11) **EP 2 373 019 A1**
(43) Date of publication of application: **05.10.2011**
(21) Application number: 10158102.3
(22) Date of filing: 29.03.2010
(51) Int. Cl.: H04N 7/167

(54) **Secure descrambling of an audio / video data stream**

(71) Applicant: Nagravision S.A., 1033 Cheseaux-sur-Lausanne (CH)
(72) Inventor: Pasini, Sylvain, 1020, Renens (CH); Brique, Olivier, 1805, Jongny (CH)
(74) Representative: Leman Consulting S.A.

(57) **Abstract**

The present invention discloses a method to prevent control word sharing by using advanced features of a security module rendering fastidious the capture of control words by hackers. The method ensures a secure descrambling of a scrambled audio/video stream by a receiver provided with a chip set connected to a security module. The security module receives seed data encrypted by a transport key. The scrambled audio/video stream is organized in packets having a packet header and a payload, the method comprises steps of
- receiving and buffering by the chip set all or part of the packet payload,
- extracting the packet header and forwarding it to the security module,
- generating by the security module a key stream from the seed data and the header,
- forwarding the key stream from the security module to the chip set via a high speed channel
- applying by the chip set a mixing function between the key stream and the packet payload in order to obtain a descrambled packet payload,
- outputting a descrambled video stream by assembling the packet header and the descrambled packet payload.

## Description

### Field of the invention

The present invention relates to a method for secure descrambling an audio / video data stream by a receiver which is locally connected to a security module.

The method is applicable to the Pay-TV domain, in which conditional access content is transmitted by a head end in form of an encrypted data stream. The decryption of the stream is authorized according to a set of pre-determined rights stored in the security module.

### Technical background

In pay-TV systems, digital audio / video data, representing a particular program or event such as a film or a game, or a program application, is usually broadcast in a digital data stream, often referred to as a transport stream, scrambled under control words, to a number of subscribers, each of which possesses a decoder or receiver/decoder capable of descrambling the transport stream for subsequent viewing of the contained program or event or to be able to run the application program contained therein. For additional security, the control words are regularly updated. Entitlement Control Messages ECM containing the control words encrypted under a transmission key are transmitted as part of the transport stream and received by a decoder having access to an equivalent of the transmission key usually stored in the security module. The control words are thus determined in order to descramble the program data or application data.

In another configuration the ECMs do not directly contain the encrypted control words but contain information allowing the control words to be determined. In this case the decryption of the ECM does not lead directly to the ECM but leads to a data block which contains the control word i.e. the control word has to be further extracted from the data block. For example, the data block could contain the control word as well as a value defining the access conditions to the content. Another operation allowing for the control word to be determined could involve a one-way function of data block for example. Such a configuration is well described in several publications such as "Functional Model of a Conditional Access System", by EBU Project Group B/CA in EBU Technical Review, Winter 1995 or WO99/18729, entitled "Method and Apparatus for Encrypted Data Stream Transmission".

In general the security operations are carried out in a security module associated with a receiver or multi-media unit. Such security modules can be implemented in a variety of manners such as on a microprocessor card, on a smartcard or any electronic module in the form of a badge or key. These modules are generally portable and detachable from the receiver. The most commonly used form has electrical contacts but contactless versions of type ISO 14443 also exist. Another implementation of the security module exists where it is directly soldered inside the receiver, a variation of this being a circuit on a socket or connector such as a SIM module. Yet another implementation is to have the security module integrated on a chip which has another function e.g. on the de-scrambling module or on the microprocessor module of the receiver. The security module can also be implemented in software.

Document EP1023795B1 discloses a method for distributing by a local cable head end operator programming service data while controlling access by his subscribers to the data. An encryption control system processes an input transport data stream into an output transport data stream based on the input transport data stream with second entitlement management messages data substituted for first entitlement management messages data. Entitlement management messages EMM and entitlement control messages ECM are multiplexed into the transport data stream. The EMM messages are addressed to a specific decoder or group of decoders while the ECM messages are broadcast to all decoders. Seed data encrypted under a multi-session key is included in the data transmitted in the ECM message. The multi-session key, encrypted under a secret serial number, is included in entitlement management message EMM. The EMM message is addressed to the decoder that has stored in it the secret serial number used to encrypt the multi-session key. Subscribers of the cable head-end operator will require a decoder with a decryptor for decrypting the multi-session key that has an algorithm compatible with encryptor of the head end encryption control system. The decoders will also have stored in them secret serial numbers that correspond to the secret serial numbers stored in memory of the head end control system. The cable head end operator can thus securely provide the multi-session key to the decoders of his subscribers. However, because of the encryption algorithm unique to the cable head-end operator and the unique list of secret serial numbers stored in memory, the decoder provided to the subscriber of the cable head-end operator is not useable to receive national encrypted services from either the satellite repeater station or any other cable head-end operator. In this way, the cable head-end operator may deny access to the national services when, for example, the subscriber does not pay his bill.

The digital audio / video data transport stream comprises usually scrambled data and control messages. The control messages are transmitted to the security module which decrypts entitlement management messages EMM to verify if the user owns the necessary rights for descrambling the audio / video data. If so, the security module decrypts entitlement control messages ECM in order to extract control words which are forwarded to a decrypting module for descrambling the audio / video data of the stream. The descrambled data are transferred to a decompression module which converts them in an appropriate format to be viewed on a display.

Such a system has been hacked so that information transmitted in the stream is used by third parties who did not purchased any access rights. Once the control words have been decrypted by an authorized user, they may be distributed to other users having no rights to access the audio / video data. These control words may thus be used to descramble data without carrying out a verification of the rights.

The main countermeasures for preventing access to data by non authorized users are for example the ciphering of the control messages either to render their decryption much more difficult or to make them unusable for more than one user. In spite of these countermeasures, some components or modules of the decoder may be replaced by fakes so that the access rights are no more properly verified and that each user is considered as having acquired the rights to access the audio / video data.

Another drawback of the standard system is that the entitlement control messages ECM carrying the control words are transmitted in the transport stream as a stream of a much lower bandwidth than the scrambled audio / video data. This configuration leads to make easier the capture of the ECM message by the hackers for obtaining the control words which are further shared with non authorized users. Contrarily, the scrambled audio / video data cannot be shared in an efficient way because of their large bandwidth and high throughput.

### Summary of the invention

In order to reinforce the security of the descrambling process of the scrambled audio / video data, it becomes advantageous to increase the bandwidth of the control words stream transmitted between the security module and the decoder so as to be equivalent or higher than the bandwidth of the scrambled audio / video data. Such increase is made possible thanks to a new generation of security modules having fast processors, fast encryption / decryption modules and a high throughput communication channel for data transmission towards the processor chip set of the decoder.

The present invention aims to prevent control word sharing by using advanced features of the security module rendering fastidious the capture of control words by hackers.

This aims are achieved by a method for secure descrambling a scrambled audio/video stream by a receiver provided with a chip set connected to a security module, the security module receiving seed data encrypted by a transport key, the scrambled audio/video stream being organized in packets having a packet header and a payload, the method comprising steps of
- receiving and buffering by the chip set all or part of the packet payload,
- extracting the packet header and forwarding it to the security module,
- generating by the security module a key stream from the seed data and the header,
- forwarding the key stream from the security module to the chip set via a high speed channel,
- applying by the chip set a mixing function between the key stream and the packet payload in order to obtain a descrambled packet payload,
- outputting a descrambled video stream by assembling the packet header and the descrambled packet payload.

In a pay TV system where the access to a transmission is to be restricted, conditional access data may be included in a table or a section broadcast in the transport stream as seed data encrypted by a transport key. This seed data is filtered by the receiver and passed to the security module. The seed data is then decrypted and processed by the security module in order to generate the key stream including the packet header previously extracted from the received packet.

This key stream is generated in such a way that its bandwidth is equivalent or larger than the bandwidth of the input scrambled audio/video data transport stream. The processor chip set applies a mixing function to the key stream and to the packet payload identified by the packet header in order to obtain a descrambled payload packet. The header is then added to this descrambled payload packet before outputting from the chip set towards a MPEG decompression module.

### Brief description of the drawings

The invention will be better understood thanks to the following detailed description which refers to the enclosed drawings given as non limitative examples.
Figure 1 shows a block diagram of a first embodiment of the invention where a packet is processed as and when it enters the chip set of the receiver.
Figure 2 shows a block diagram of a second embodiment of the invention where the chip set includes a random access memory for storing the input packet data and the key stream for processing and descrambling the packet data before output.

### Detailed description of the invention

A head end of a digital television broadcast system transmits scrambled audio / video data in the form of discrete transport stream packets or transport packets, each packet P being of a predetermined length and containing a header H and a scrambled payload SCP section. It has to be noted that the length of the packets in clear or descrambled form as well as the length of the sections (header and payload) are preserved when encryption or scrambling operations are performed.

The MPEG (Moving Picture Experts Group) standard is the preferred standard in this domain and sets out, among other things, a predetermined format for such packets. According to the standard ISO/IEC 13818-1, Second edition. 2000-12-01, a packet is the basic unit of data in a transport stream. It consists of a synchronization byte, followed by three one-bit flags and a 13-bit Packet Identifier (PID). This is followed by a 4-bit continuity counter. Additional optional transport fields, as signaled in the optional adaptation field, may follow. The rest of the packet consists of payload. Packets are 188 bytes in length, but the communication medium may add some error correction bytes to the packet. For example, DVB-T/C/S uses 204 bytes and ATSC 8-VSB, 208 bytes as the size of emission packets (transport stream packet + forward error correction data). ATSC transmission adds 20 bytes of Reed-Solomon forward error correction to create a packet that is 208 bytes long.

The packet header H comprises general descriptive data regarding the packet P, while the payload comprises the data to be processed at the receiver / decoder. The packet header H includes at least a packet ID or PID identifying the packet P. The payload SCP of the packet may contain audio, video or other data such as application data or, in particular, conditional access system data. An input data stream is filtered by the receiver according to the PID of each packet P. Audio / video data requiring immediate processing is forwarded to an appropriate processor in the form of packetized elementary stream or PES. This continuous data stream, which is formed by assembling the payloads of the transport packets, itself, comprises a sequence of packets, each PES packet comprising a packet header and payload data.

A multimedia receiver such as a pay TV set top box or decoder comprises among other modules a chipset CS connected to a security module SM via an appropriate interface. The chipset CS which is housed in general on one chip provides the buses and electronics to allow the processor, memory and input/output modules to interact.

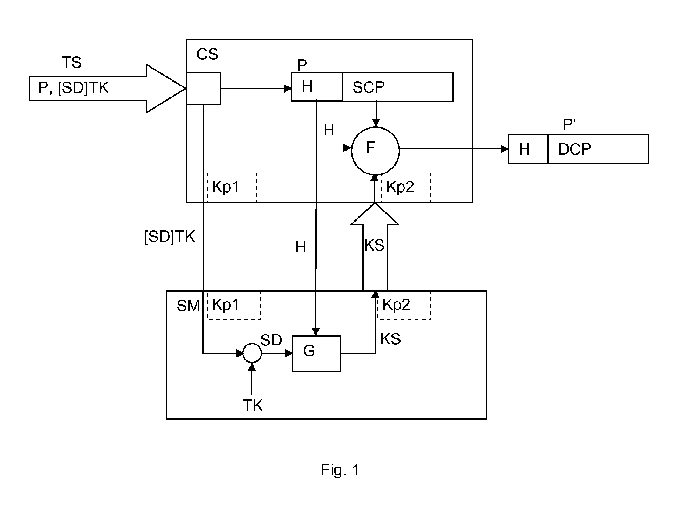

As illustrated by figure 1, the chipset CS receives scrambled packets P from an input transport stream TS comprising seed data SD defining access conditions to the scrambled payload data SCP of the packets P. The seed data SD may be defined as data blocks allowing the security module to determine a control word CW or a key by combination with other data blocks, this control word CW or key being used for descrambling the scrambled payload data. In some systems, the seed data may form an entitlement control message ECM carrying one or several control words CW or specific data to be used for calculating the control word(s) CW. In further implementations the control word(s) CW itself or themselves form the seed data.

The seed data SD preferably encrypted by a transport key TK is forwarded to the security module SM for decryption with the transport key TK stored by the security module SM. At the same time a packet P is processed by the chipset CS which sends the header H to the security module SM, the scrambled payload data SCP pass through a buffer until data for descrambling are made available. The security module SM is provided with a generator G using the decrypted seed data SD and the received header H extracted from the packet P to form a data stream called key stream KS. The generator G is provided with a cryptographic function able to produce a large amount of data even the input data (header H and seed data SD) may represent a relative small amount of data. This key stream KS is transmitted to the chipset CS via a secure high speed channel linking the security module to the receiver while the encrypted seed data and the header are transmitted to the security module through a low speed or standard throughput channel.

According to an option, the generator G may also be configured for adding predefined data such as filling data or padding data to the output key stream to increase its data volume amount.

The chipset CS is provided with a calculation module which applies a mathematical mixing function F between the key stream KS and the scrambled payload data SCP of the packet P identified by the header H previously sent to the security module SM. The result thus obtained represents the payload data in a descrambled form DCP to which the header H is added by the calculation module.

The mixing function F may represent an XOR operation or any other logical operation. Other mathematical function or cryptographic function can also be envisaged.

According to a first embodiment, the processing of the packets P received by the chip set CS by using the key stream KS generated by the security module SM may be carried out in parallel. This performance is made possible thanks to the high throughput of the key stream KS which is at least equivalent to the input packet stream throughput. The payload data SCP of an input packet P is immediately descrambled by the key stream produced by the security module. The header H of the packet used for the key stream returns to the calculation module via the high speed channel and is synchronized with the header of the scrambled packet P initially received by the chip set CS. In this way each input scrambled packet is descrambled "on the fly" with a minimized time shift between reception of the scrambled packets and the output of the corresponding descrambled packets.

It has to be noted that the payload data SCP of an input packet P may start to descramble at reception of only a part of the packet, the packet header H being sent to the security module SM. The chip set CS does not necessarily wait until the complete packet P is received before starting descrambling operation. According to the configuration of the input of the receiver and the size of the buffer, packets may be descrambled as soon payload data is received, or after a predefined number of bytes of the payload data or after one or a predefined number of packets.

One advantage of this method is that the access control data in form of the seed data SD cannot be easily extracted from the key stream KS flowing between the security module SM and the chipset CS because of the high throughput. This transmission mode which throughput is equivalent or larger than the one of the input scrambled audio/video data transport stream TS renders capture of these control words or data much more difficult than in standard transmission mode at low throughput.

According to a preferred implementation and for improving data transmission security, data entering into the security module i.e. the packet header H and the encrypted seed data [SD]TK is preferably encrypted with a first pairing key Kp1 using a first algorithm. Such a pairing or matching mechanism involving identifiers of the receiver or the chip set and the security module is described for example in the document EP1078524B1. The key stream KS may be encrypted with a second pairing key Kp2 using a second algorithm specially adapted for a channel configured for high data throughput. The pairing keys Kp1, Kp2 are calculated and stored in the security module and in the receiver or in the chip set at a set up phase during first connection of the security module to the receiver. An additional module to decrypt or encrypt each input / output data with the pairing keys Kp1, Kp2 is also included in both security module and receiver or chip set.

The pairing mechanism may be applied either only to the low throughput channel used by the packet header H and the encrypted seed data [SD]TK or only to the high throughput channel used by the key stream KS or to both channels. The pairing key Kp1, Kp2 may be either different for each channel or common to both channels, but the algorithm may preferably be different for each channel.

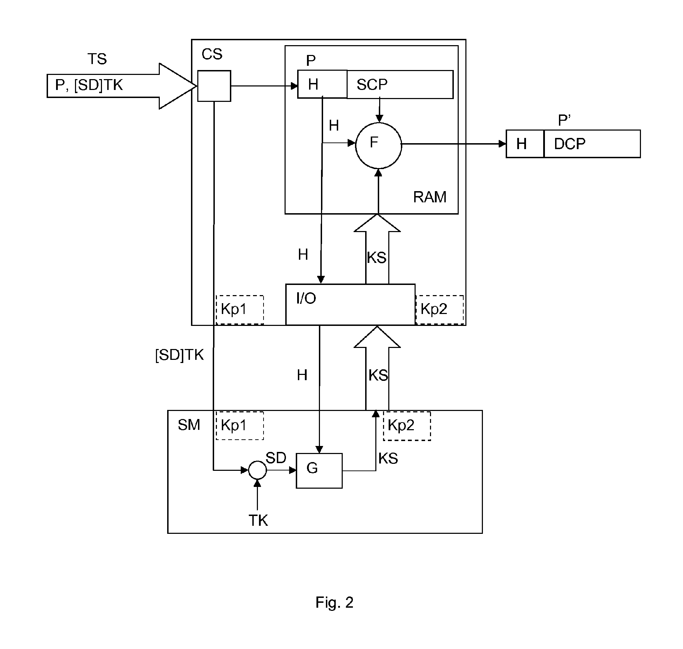

In a second embodiment of the invention as illustrated by figure 2, the chip set CS comprises a random access memory RAM connected to the security module SM via an input / output controller I/O. The input scrambled payload packet SCP is stored in the memory RAM while the header H is sent to the security module SM through the input output controller I/O. The key stream KS, which is generated on the basis of the header H and the seed data SD by the security module, is sent to the chip set via the high speed channel and stored in the RAM memory. The input scrambled payload packet SCP and the key stream KS are mixed together in the RAM memory by using the mixing function F to obtain a descrambled payload packet DCP to which the corresponding header H is attached.

In this second embodiment, an input scrambled packet is stored in the RAM memory as long it is not descrambled by the key stream KS. Once the packet is descrambled, the RAM memory receives the next packet from the input audio / video data stream and so on. A synchronization with the header is thus not necessary like in the first embodiment where packets are processed "on the fly" in a continuous processing flow.

According to a further embodiment and to improve security, the headers H of the input packets may be in an encrypted form and transmitted as such by the chip set CS to the security module SM. The key stream generator G introduces into the high throughput key stream KS the encrypted packet headers which are used as synchronization data during descrambling operation by the mixing function F in the chip set CS. The decryption of the headers is thus not necessary as they are used mainly for synchronizing the input packets stream with the key stream produced by the security module.

## Claims

1. Method for secure descrambling a scrambled audio/video stream (TS) by a receiver provided with a chip set (CS) connected to a security module (SM), the security module (SM) receiving seed data (SD) encrypted by a transport key (TK), the scrambled audio/video stream (TS) being organized in packets (P) having a packet header (H) and a payload (SCP), the method comprising steps of
- receiving and buffering by the chip set (CS) all or part of the packet payload (SCP),
- extracting the packet header (H) and forwarding it to the security module (SM),
- generating by the security module (SM) a key stream (KS) from the seed data (SD) and the header (H),
- forwarding the key stream (KS) from the security module (SM) to the chip set (CS) via a high speed channel
- applying by the chip set (CS) a mixing function (F) between the key stream (KS) and the packet payload (SCP) in order to obtain a descrambled packet payload (DCP),
- outputting a descrambled video stream by assembling the packet header (H) and the descrambled packet payload (DCP).

2. The method according to claim 1 **characterized in that** the header (H) of the packet (P) used for generating the key stream (KS) is returned by the security module (SM) to the chip set (CS) and is synchronized with the header (H) of the packet (P) initially received by the chip set (CS).

3. The method according to claim 1 **characterized in that** the chip set (CS) comprises a random access memory (RAM) connected to the security module (SM) via an input / output controller (I/O), the method comprising steps of:
- storing into the random access memory (RAM) the packet (P) and forwarding the packet header (H) to the security module (SM) via the input output controller (I/O),
- generating by the security module (SM) a key stream (KS) from the seed data (SD) and the header (H),
- forwarding the key stream (KS) from the security module (SM) to the random access memory (RAM) via a high speed channel and the input output controller (I/O),
- storing in the random access memory (RAM) the key stream (KS) by applying a mixing function (F) between the key stream (KS) and the previously stored packet payload (SCP) in order to obtain a descrambled packet payload (DCP),
- assembling the previously stored packet header (H) with the descrambled packet payload (DCP), and outputting a descrambled packet.

4. The method according to anyone of claim 1 to 3 **characterized in that** the bandwidth of the key stream (KS) at the output of the security module (SM) is at least equivalent or higher than the bandwidth of the scrambled audio/video stream (TS) at the input of the chip set (CS)

5. The method according to anyone of claim 1 to 4 **characterized in that** the packet header (H) and the encrypted seed data (SD)TK are encrypted by a first algorithm with a first pairing key (Kp1) stored in the security module (SM) and in the chip set (CS).

6. The method according to anyone of claim 1 to 5 **characterized in that** the key stream (KS) is encrypted by a second algorithm with a second pairing key (Kp2) stored in the security module (SM) and in the chip set (CS).

7. The method according to anyone of claim 1 to 6 **characterized in that** the header of the input packet is encrypted and transmitted as such by the chip set (CS) to the security module (SM), said encrypted header, being introduced by the security module into the key stream (KS) sent to the chip set (CS), is used for synchronizing the key stream (KS) with the input packet stream during descrambling operation by the mixing function (F) of the chip set (CS).
